# EUROPEAN PATENT APPLICATION

(11) **EP 4 498 057 A1**
(43) Date of publication of application: **29.01.2025**
(21) Application number: 23187992.5
(22) Date of filing: 27.07.2023
(51) Int. Cl.: G01M 3/20, G01M 3/04

(54) **LEAKAGE DETECTION**

(71) Applicant: Airbus Operations GmbH, 21129 Hamburg (DE)
(72) Inventor: WOLFF, Christian, 21129 Hamburg (DE); KURRE, Jens-Dietrich, 21129 Hamburg (DE); KAMENI MONKAM, Linus, 21129 Hamburg (DE); HEERE, Michael, 21129 Hamburg (DE)
(74) Representative: LKGLOBAL Lorenz & Kopf Patentanwalt Attorney at Law PartG mbB

(57) **Abstract**

The present invention relates to a leakage detection and evaluation. In order to provide an improved assessment of a leakage, a leakage characterization arrangement (10) is provided that comprises a compound (12) with at least two emission generating markers (14a, 14b). The compound is applicable at an outside (16) of an enclosure (18), encapsulating a fuel (20) from the surroundings (22). The applied compound is configured to physically react and/or chemically react upon exposure to an activation energy (24) resulting from leaking fuel (26) from an inside (28) of the enclosure. The physical reaction and/or the chemical reaction (30) actively produce a detectable emission (32) that indicates at least one measurable parameter (34) of a leakage site (36) based on the at least two emission generating markers.

## Description

### FIELD OF THE INVENTION

The present invention relates to leakage detection and evaluation, and more specifically, the invention relates to a leakage characterization arrangement, to a detection system and to a method for detecting a leakage.

### BACKGROUND OF THE INVENTION

Facilities that supply, store or process fluids, like a fuel, may undergo a leakage. The leakage of the fuel may result in a situation that may require attention attempting to provide immediate clearance. For clearing the leakage however, information about the leakage may be required. To obtain this information, a leakage surveillance or monitoring system may be applied. However, it has been shown that certain fuel leakage, like for example hydrogen leakage, is difficult to detect.

### SUMMARY OF THE INVENTION

There may thus be a need for an improved assessment of a leakage.

The object of the present invention is solved by the subject-matter of the independent claims; further embodiments are incorporated in the dependent claims. It should be noted that the following described aspects of the invention apply also for the leakage characterization arrangement, for the detection system and for the method for detecting a leakage.

According to the present invention, a leakage characterization arrangement is provided, comprising a compound with at least two emission generating markers. The compound is applicable at an outside of an enclosure, encapsulating a fuel from the surroundings. The applied compound is configured to physically react and/or chemically react upon exposure to an activation energy resulting from leaking fuel from an inside of the enclosure. The physical reaction and/or the chemical reaction actively produce a detectable emission that indicates at least one measurable parameter of a leakage site based on the at least two emission generating markers.

As an advantage, immediate emission of light after a flame or leakage occurs.

As a further advantage, the detection of hydrogen flames and hydrogen leakages is quick.

As an advantage, localization of the flame or leakage is possible by application of different detection mixtures for different fire zones which allows to shut off only the affected fuel cell subsystems or fuel cell components and therefore prevents to shut off the entire fuel cell system.

As a further advantage, the detection of hydrogen flames and hydrogen leakages is technically comprehensive.

As an advantage, the detection materials, i.e., the compound, are incombustible and can be applied in potentially explosive environments.

As a further advantage, the detection of hydrogen flames and hydrogen leakages is safe.

As an advantage, the materials will not be combusted/consumed, as such, the repeatability of the method is high.

As a further advantage, the detection of hydrogen flames and hydrogen leakages is reliable.

According to an example, the detectable emission provides a characteristic emission pattern. The characteristic emission pattern comprises a unique emission spectrum of emission intensities at distinct photon wavelengths. The characteristic emission pattern is indicative for the at least one measurable parameter of the leakage site at the enclosure.

As an advantage, emission of light spectra with characteristic "fingerprint" wavelengths results.

According to an example, the at least two emission generating markers each comprise a different chemical composition. The different chemical composition provides for a characteristic photon emission.

As a further advantage, the detection of hydrogen flames and hydrogen leakages is false alarm resistant.

According to an example, the at least two emission generating markers are separated in the leakage characterization arrangement with respect to the enclosure, such that they have a different distance to the activation energy of the leaking fuel.

According to an example, the at least one measurable parameter is further chosen from the group comprising:
- a size of the leakage site, and/or
- a geometry of the leakage site, and/or
- an amount of energy released at the leakage site, and/or
- a duration of the leakage at the leakage site, and/or
- a velocity of leaking fuel at the leakage site, and/or
- a flame or no flame at the leakage site,
- a least one temperature of the leakage site,
- a least one minimum temperature at the leakage site,
- a least one temperature zone at the leakage site,
or combinations thereof.

According to the present invention, also a detection system for leaking fuel is provided, comprising at least one detector and a leakage characterization arrangement according to one of the preceding claims comprising a compound with at least two emission generating markers. The at least one detector is located in a detection distance towards the compound. The compound is configured to provide a specific emission pattern depending on a location of each of the at least two emission generating markers at an enclosure. The at least one detector is configured to generate a specific detection signal upon contact to the specific emission pattern in the detection distance.

According to an example, the system further comprises at least one enclosure for storing the leaking fuel. The at least one enclosure provides each of the at least two emission generating markers at a different location.

According to an example, the system further comprises a shutoff valve at a duct arrangement comprising at least one specific duct chosen from the group of a supply duct, a ventilation duct and an exhaust duct and a processing unit. The duct arrangement is configured to supply the at least one enclosure. The processing unit is connected to the shutoff valve and to the at least one detector. The at least one detector monitors the at least one enclosure. The processing unit is configured to generate a specific shutoff signal upon receiving a predetermined detection signal from the at least one detector. The specific shutoff signal triggers a closure of the shutoff valve to stop the supply to the at least one enclosure.

According to the present invention, also a method for detecting a leakage is provided. The method comprises the following steps:
- Providing at least two emission generating markers at different locations outside an enclosure encapsulating a fuel from the surroundings;
- Providing at least one detector in a detection distance to the enclosure;
- Monitoring the enclosure with the at least one detector;
- Physically reacting and/or chemically reacting of the compound upon exposure to an activation energy resulting from leaking fuel from an inside of the enclosure; the physical reaction and/or the chemical reaction are actively producing a detectable emission; and
- Detecting the emission that indicates at least one measurable parameter of the leakage site based on the at least two emission generating markers.

According to an aspect, leakage information in terms of its presence, location and severity is provided. Thus, even for certain fuel, like for example hydrogen, leakage is still detected due to the detection capabilities of the leakage surveillance system, and, in consequence, provides support in clearing the leakage.

According to an aspect, in situ leakage characterization is made possible due to providing a detectable emission compound with at least two emission generating markers that are activated by the leaking fluid such as a fuel like hydrogen in combination with optical cameras that detect the physical or chemical reaction product of the markers.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a leakage characterization arrangement and its application.
Fig. 2 shows an example of a leakage characterization arrangement and a detection system responsive to leakage.
Fig. 3 shows basic steps of an example of a method for detecting a leakage.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

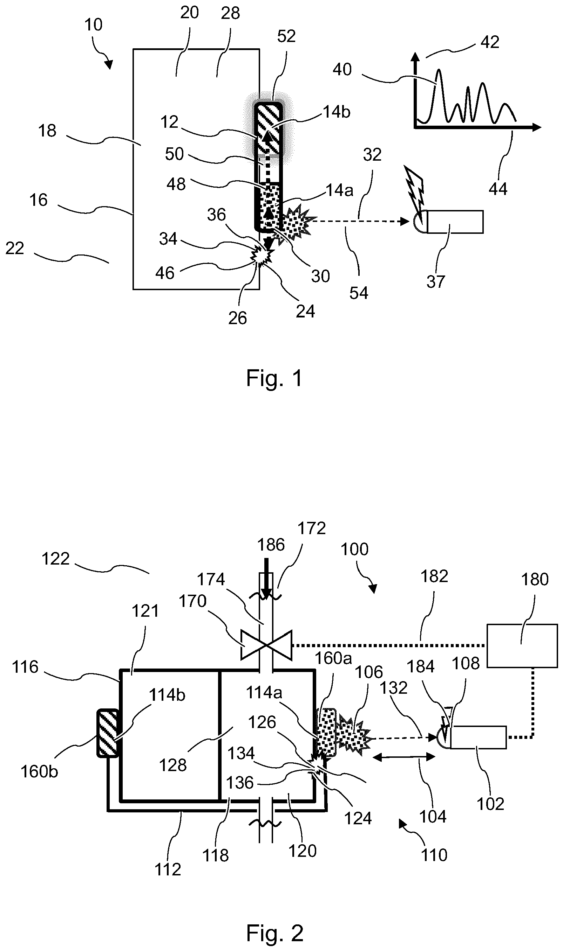

Fig. 1 schematically shows an example of a leakage characterization arrangement 10 and its application. The leakage characterization arrangement 10 comprises a compound 12 with at least two emission generating markers 14a, 14b. The compound 12 is applicable at an outside 16 of an enclosure 18, encapsulating a fuel 20 from the surroundings 22. The applied compound 12 is configured to physically react and/or chemically react upon exposure to an activation energy 24 resulting from leaking fuel 26 from an inside 28 of the enclosure 18. The physical reaction and/or the chemical reaction 30 actively produce a detectable emission 32 that indicates at least one measurable parameter 34 of a leakage site 36 based on the at least two emission generating markers 14a, 14b.

The term "leakage sensitive arrangement" relates to an object that changes its measurable properties depending on a change of its environment, respectively the surroundings 22 in Fig. 1.

In an example, the leakage sensitive arrangement can come in various geometries and shapes, such as a cover, a net, a cable, a pipe, a pill, a probe.

The term "compound" can be understood as a blend of at least one substance that actively expels, emits or transmits a part of itself into its environment. The term "compound" can also be related to as emitter, transmitter, pulse transmitter, pulse emitter, radiator, transducer, projector, sender, or source.

The "leakage characterization arrangement" can also be referred to as a leakage sensitive and activation energy sensitive arrangement.

The term "emission generating markers" relates to a substance that eradiates a part of itself to yield a unique radiation fingerprint that is capable of a clear and unambiguous identification of at least one of the at least two emission generating markers 14a, 14b in Fig. 1 itself.

In an example, not only two emission generating markers 14a, 14b are provided but also three or five emission generating markers or more.

The "compound" can also be referred to as substance, agent, emission generating compound or material.

The term "applicable" means that the compound 12 does not change its condition or state at the enclosure 18 in Fig. 1, such that it, e.g., spontaneously reacts.

The term "outside" relates to the opposite of the inside 28. Outside 16 describes the surface of the enclosure 18 that is not in contact to the inner volume. The outside 16 can also comprise recesses of the enclosure 18 and recesses at flanges, not shown in Fig. 1, of the connection of supplies to the enclosure 18.

The term "enclosure" relates to an entity that separates two spaces. One space is the environment, or the surroundings 22 in Fig. 1, and the other space is an inner volume inside 28 the enclosure 18. The inner volume and the environment do not contact each other. The enclosure 18 encloses the inner volume. The inner volume can be referred to as inside 28.

The enclosure 18 can also be referred to as a tank, a vessel, a container, a cistern or a basin. In an example, the storing unit can also be a tube or a pipe or a piping system and is not restricted to the shape shown in Fig. 1.

The term "encapsulating" relates to the function of the enclosure 18 in separating the inner volume from the environment such that they do not contact each other.

The term "fuel" relates to matter and can be in a gaseous or liquid state being a fluid.

The fuel 20 can also be referred to as stored substance, fluid, stored fluid or stored matter.

In an example, the fuel 20 is a material that carries a chemical energy.

In an example, the fuel 20 comprises gaseous hydrogen.

In another example, the fuel 20 is cryogenic or liquid hydrogen.

In another example, the fuel 20 is pressurized hydrogen.

In an example, the enclosure 18 is leak-tight with respect to hydrogen.

The term "surroundings" can be understood as a structure the enclosure 18 is connected to or embedded in, not shown in Fig. 1 due to reasons of clarity. The surroundings 22 are at the environment. Outside of the surroundings 22 is an external environment.

In an example, the surroundings 22 are a storage space of a vehicle.

In another example, the surroundings 22 are the interior of an aircraft.

In an example, the surroundings 22 are defined by a hydrogen converting facility.

The term "physically and/or chemically react" relates to the rearrangement and transfer of electrons in between and/or between the atoms within the matter of the compound 12 and the at least two emission generating markers 14a, 14b that is herein also described as the term "chemical reaction". The term chemistry is herein understood as the physics of the outer electron shell of atoms.

The term "physically and/or chemically react", also relates to the transfers of energies between atoms via electromagnetic energy, e.g., radiation energy or mechanical energy during a physical reaction.

The term "activation energy" can be understood as an energetical barrier that needs to be overcome such that the compound 12 changes its state or condition by itself. The change of state is irreversible and/or reversible and is induced by applying a certain amount of energy to the compound 12 in Fig. 1. The certain amount or quantum of energy can be applied in the form of electromagnetic, thermal or mechanical energy.

The "leaking fuel" can also be referred to as leaked fuel. It refers to the process of a fluid permeating or creeping through channels and holes of the enclosure 18 from the inner volume of the enclosure 18 to the outside 16 of the enclosure 18 in Fig. 1.

In an example, the "leaking fluid" creates a situation that may require immediate clearance and detection.

In an example, the "leaking fluid is hard to observe and may require immediate indication, as shown in Fig. 1.

In an example, the condition of "leaking fluid" is a failure case of the enclosure 18.

The term "an inside of the enclosure" relates to the opposite of the outside 16 of the enclosure 18, that is basically at the surrounding 22. Inside 28 describes the surface of the enclosure 18 that is not in contact to surroundings 22 of the enclosure 18 but with the fuel 20 contained by the enclosure 18, isolated from the surroundings 22.

The term "emission" relates to the process of a material in actively radiate, emit, expel or beam a part of its matter or photons into its environment. The compound 12 or the at least two emission generating markers 14a, 14b emit an emission in Fig. 1. The emission does not necessarily comprise the material itself, it predominantly comprises a chemically and/or physically distinct and transformed part of the material, for example photons or photo electrons.

The term "detectable" relates to a property of the emission such that it is able to generate a discernable signal upon contact with another entity, for example a detection unit 37 in Fig. 1.

In an example, a detection unit is responsive to electromagnetic waves, to matter waves, such as vibration or certain molecules or particles in the matter wave. The electromagnetic waves comprise UV (100 nm to 380 nm wavelength), VIS (380 nm to 780 nm wavelength), IR (780 nm to 1 mm wavelength), or microwave radiation (1 mm to 30 cm).

The term "indicate" relates to a property of the emission to be interpreted as unambiguous and unique signal for a physical and/or chemical condition of the compound 12.

"Indicate" can also be referred to as show, specify, reveal, suggest, mean, express, or prove.

The term "measurable parameter" relates to a concept that can describe the condition of the leakage site 36 in terms of a mathematical value. The measurable parameter 34 relates to the dimensions of space, time, mass and energy.

The term "leaking site" relates to the location of the leaking of the fuel 20 with relation to the enclosure 18 as leaked fuel, as shown in Fig. 1. The channels and holes of the leaking site can come in various forms and shapes, which are sometimes hard to assess in the operating state of the enclosure 18. The properties of the leaking site also determine the active state and nature of the leaking.

In an example, the way in how the emission is based on the at least two generating markers can provide unambiguous information about the leakage site 36 in Fig. 1.

In an example of Fig. 1, the detectable emission 32 provides a characteristic emission pattern 40. The characteristic emission pattern is shown on the right hand side of Fig. 1 in terms of a coordinate system representation of a light spectrum. The characteristic emission pattern 40 comprises a unique emission spectrum of emission intensities 42 at distinct photon wavelengths 44. The characteristic emission pattern 40 is indicative for the at least one measurable parameter 34 of the leakage site 36 at the enclosure 18.

The term "characteristic emission pattern" can also be understood as a fingerprint that is unique for any occurrence of a leakage site 36 in Fig. 1. The characteristic emission pattern 40 has a shape, as shown in Fig. 1, that is based on a spectral analysis of the detectable emission 32. The spectrum of the characteristic emission pattern 40 is composed of intensities of emission peaks that are located at different positions in the spectrum resembling the distinct photon wavelength of the emission intensities 42. Several emission peaks at several photon wavelengths in the spectrum add up to a shape resembling a characteristic emission pattern 40. The characteristic emission pattern 40 is configured to provide information by its shape about the leakage site 36, in the way how the leakage site 36 in Fig. 1 is characterized in terms of space, energy, mass, time and temperature.

In an example, for the purpose of yielding a spectrum, a prisma for light dispersion in front of a detector is applied, not shown in Fig. 1.

In an example, this information is provided by the amplitude of the intensities of the emission peaks, the peak width or the presence or absence of the emission peaks.

"Unique" can also be referred to as individual, particular or exclusive.

In an example, the characteristic emission pattern 40 is configured such that its emission peaks do not interlap or interfere, such that no characteristic emission pattern 40 results which is composed by a single broad emission peak, not shown in Fig. 1.

The term "distinct photon wavelengths" can also be understood as qualitative information with respect to the emission spectrum that provides the intensities as quantitative information.

In an example not shown in Fig. 1, the at least two emission generating markers 14a, 14b each comprise a different chemical composition. The different chemical composition provides for a characteristic photon emission.

The term "different chemical composition" can be understood as the markers being different in the kind of atoms they are composed of or being different in the kind of interaction between their atoms, i.e., covalent bond, ionic bond etc.

In an example, for any different chemical composition a different photon emission can be expected, when the chemical composition is excited energetically. This energetical excitation can for example be realized by thermal heat, the physical reaction and/or the chemical reaction 30 or excitation by electromagnetic radiation or application of mechanical stress. All the afore mentioned kind of energies can be provided by the leakage site 36, respectively the leakage event itself or a substance added to the compound 12 next to the at least two emission generating markers 14a, 14b in Fig. 1. This substance can be a pyrotechnic material that is configured to transmit energy to the at least two emission generating markers 14a, 14b when in contact with the leakage site 36 in Fig. 1.

In an example, the energetical excitation of the at least two emission generating markers 14a, 14b leads to the emission of photons with a wavelength that is characteristic for the at least two emission generating markers 14a, 14b involved.

In an example, the emission of photons stems from the decay of electronically excited states of the atoms in the at least two emission generating markers 14a, 14b.

The term "a characteristic photon emission" can be understood as the elemental fingerprint.

In an example, the characteristic photon emission of one of the at least two emission generating markers 14a, 14b can electronically excite the other of the at least two emission generating markers 14a, 14b in order to provide for the characteristic photon emission of the other of the at least two emission generating markers 14a, 14b in Fig. 1.

In an example, the chemical composition comprises metal ions.

In an example, the chemical composition comprises alkaline and/or alkaline earth metals.

In an example, the chemical composition is chosen to produce an emission that is chemically unreactive with respect to the surroundings 22 of Fig. 1.

In an example, the photon emission comprises visible photon radiation.

As an advantage, visible photon radiation is produced by the at least two emission generating markers 14a, 14b that facilitates their detection.

Photon emission can also be referred to as light.

The term "characteristic photon emission" can also be understood to as the human perception of visible light, namely color.

In an example of Fig. 1, each of the at least two emission generating markers 14a, 14b provides a contribution to the emission intensities 42 of the characteristic emission pattern 40. The contribution is indicative for the at least one measurable parameter 34 being the location 46 of the leakage site 36 with respect to the enclosure 18.

The term "contribution" relates to the composition of the compound 12 in comprising more, in terms of atoms or molecules that emit the characteristic photon emission, of one of the at least two emission generating markers 14a, 14b than of the other of the at least two emission generating markers 14a, 14b. The difference in the amount between the at least two emission generating markers 14a, 14b leads to a difference in their overall emission behavior that is present as the characteristic emission pattern 40 of Fig. 1.

The colors referred herein can also be regarded as emission intensities 42 at distinct photon wavelengths 44 in nanometers in Fig. 1.

In an example, more of an emission generating marker A, emitting blue photons, with a photon wavelength between 450 and 495 nanometers, is present in the compound 12 than of an emission generating marker, B emitting red photons, with a photon wavelength between 620 to 750 nanometers. In this example, the emission generating marker A and B are on of the at least two emission generating markers in Fig. 1. The detectable emission 32 of the compound 12, respectively the characteristic emission pattern 40, will predominantly show the high emission peaks of blue photons, whereas the emission peak of red photons is small.

In an example, more of the emission generating marker A, emitting blue photons, is present in the compound 12 at a middle part of the enclosure 18 than at a bottom or a top part of the enclosure 18, not shown in Fig. 1. At the bottom or the top part of the enclosure 18 more emission generating marker B is present than emission generating marker A. An invisible leaking site at the middle part will cause emission of the blue photons of the emission generating marker A and the characteristic emission pattern 40 of the detectable emission 32 will show a high emission peak of blue photons. This indicates a location 46 of the leaking site at the middle part of the enclosure 18. An invisible leaking site at the bottom or top part will cause emission of the red photons of the emission generating marker B and the characteristic emission pattern 40 of the detectable emission 32 will show a high emission peak of red photons. This indicates a location 46 of the leaking site at the bottom or the top part of the enclosure 18.

The emission generating marker A can also be referred to as blue emission generating marker.

The emission generating marker B can also be referred to as red emission generating marker.

In an example, a gradient of different quantitative amounts of emission generating marker A and B is provided with respect to certain locations at the enclosure.

In an example of Fig. 1, the at least two emission generating markers 14a, 14b are separated in the leakage characterization arrangement with respect to the enclosure 18, such that they have a different distance 48 in Fig. 1 to the activation energy 24 of the leaking fuel 26.

In an example, the at least two emission generating markers 14a, 14b are located at different parts of the enclosure 18 and are separated parallel to the surface of the enclosure 18.

In an example, the at least two emission generating markers 14a, 14b are separated by a filler material in the compound 12 perpendicular with respect of the surface to the enclosure 18, not shown in Fig. 1.

The term "contact to the activation energy of the leaking fuel 26 is different" means that one of the at least two emission generating markers 14a, 14b can provide the characteristic photon emission by touching the activation energy 24, whereas the other of the at least two emission generating markers 14a, 14b cannot touch the activation energy 24, as shown in Fig. 1, since it has a larger distance from the activation energy 24 and therefore can not yet, but possibly later provide the characteristic photon emission.

In an example of Fig. 1, the compound 12 further comprises at least one emission extender 50 having luminescent properties. The at least one emission extender 50 is configured to prolong the detectable emission 32 by its luminescence beyond a fading of the activation energy 24.

The term "emission extender" can also be understood as an entity that causes an echo of the characteristic photon emission such that the time range of the detectable emission 32 in Fig. 1 is extended.

The term "luminescent properties" relates to a property of a substance, that leads to a spontaneous emission of radiation from an electronically excited species or from a vibrationally excited species of the substance not in thermal equilibrium with its environment.

In an example, the at least one emission extender 50 can provide for chemiluminescence.

In an example, the at least one emission extender 50 can provide for triboluminescence.

In an example, the at least one emission extender 50 can provide for thermoluminescence.

In an example, the at least one emission extender 50 can provide for fluorescence.

In an example, the at least one emission extender 50 can provide for phosphorescence.

In an example, the at least two emission markers also comprise luminescent properties.

In an example, the characteristic photon emission excites the at least one emission extender 50 to provide for luminescence at the arrangement in Fig. 1.

In an example, the contact to the fuel 20 from the enclosure 18 leads to luminescence of the at least one emission extender 50.

In an example of Fig. 1, at least one of the at least two emission generating markers 14a, 14b of the compound 12 is encapsulated in at least one retardation layer 52. The at least one retardation layer 52 is configured to provide for an energy and/or time dependent detectable emission 54 of the compound 12 when in contact to the activation energy 24.

In an example, the at least one retardation layer 52 delays the impact of the activation energy 24 on the at least one of the at least two emission generating markers 14a, 14b.

In an example, the compound 12 comprises different layers of different emission generating markers providing for different emission patterns, which are separated by retardation layers of different penetration times or energies, not shown in Fig. 1.

As an advantage, the duration of leakage can be estimated.

As an advantage, it can be determined whether a flame at the leakage site 36 is present or not.

As an advantage, a false alarm can be prevented.

As an advantage, the energy loss through the leakage can be estimated.

In an example not shown in Fig. 1, the at least one measurable parameter 34 is further chosen from the group comprising:
- a size of the leakage site 36, and/or
- a geometry of the leakage site 36, and/or
- an amount of energy released at the leakage site 36, and/or
- a duration of the leakage at the leakage site 36, and/or
- a velocity of leaking fuel 26 at the leakage site 36, and/or
- a flame or no flame at the leakage site 36,
- a least one temperature of the leakage site 36,
- a least one minimum temperature at the leakage site 36,
- a least one temperature zone at the leakage site 36,
or combinations thereof.

In an example, the compound 12 also comprises a reaction controller, not shown in Fig. 1. The reaction controller is configured to make the physical reaction and/or the chemical reaction 30 of the compound 12 and the at least two emission generating markers 14a, 14b steerable towards at least one of the group of:
- generation of activation energy 24 upon contact with the fuel 20,
- retardation of the physical reaction and/or the chemical reaction 30,
- enhancing the photon emission of the physical reaction and/or the chemical reaction 30,
- isolating the physical reaction and/or the chemical reaction 30 products from the surroundings 22, and
- confining the physical reaction and/or the chemical reaction 30 to a geometrically restricted space.

In an example, the compound 12 and the at least two emission generating markers 14a, 14b are configured to be combinable with a pyrotechnic material to amplify the detectable emission 32, not shown in Fig. 1.

In an example, the temperature and/or minimum temperature can be determined on the basis of the characteristic emission spectrum, or at least roughly estimated.

In an example shown Fig. 1, the leaking fuel 26 is hydrogen and the physical reaction and/or the chemical reaction 30 of the compound 12 are initiated by an activation energy 24 of leaking hydrogen from the enclosure 18.

In an example, the leaking hydrogen at the enclosure 18 burns and the thermal energy initiates the physical reaction and/or the chemical reaction 30 of the compound 12 and the at least two emission generating markers 14a, 14b.

In a further example, the leaking hydrogen at the enclosure 18 is contacted with the reaction initiator or activating material at the compound 12. The activating material, or activator generates thermal energy upon contact with the hydrogen, the thermal energy initiates the physical reaction and/or the chemical reaction 30 of the compound 12.

In an option of an example not shown in Fig. 1, the activation energy 24 for the compound 12 results from a thermal energy release of the leaking fuel 26 and/or is initially generated in the compound 12 itself by contact between the compound 12 and the leaking fuel 26.

In an example, the thermal energy release or the release of thermal energy takes place at the burning leaking fuel 26. The thermal energy is released via a flame of the burning fuel in the form of radiation or convection.

In an example, flames of a burning leaking fuel 26, transmit their thermal energy predominantly via convection. This makes the flame difficult to detect via its emitted radiation. The compound 12 and the at least two emission generating markers 14a, 14b are activated by the heat convection of the flame, leading to the physical reaction and/or the chemical reaction 30 and a second flame with a higher radiation, which is easier to detect.

In an example, the flames stem from burning fuel.

In an example, the flames stem from burning hydrogen.

In another example, the hydrogen burns to yield hydrogen micro flames, outside 16 at the surface of the enclosure 18.

In an option, the activation energy 24 is initially generated in the compound 12. The compound 12 comprises a reaction initiator or reaction starter that produces activation energy 24 upon contact with the leaking fuel 26 from the enclosure 18. Here the activation energy 24 can also be regarded as the energy of the chemical bonds of the leaking fuel 26.

In an example, the reaction initiator produces heat as activation energy 24 in contact with hydrogen or hydrogen and oxygen.

In an example, the reaction initiator comprises an organometallic compound.

In an example, the reaction initiator comprises Pd, or Pt.

In an example, the reaction initiator comprises a mixture of Pt, WO₃, and calcium fluoride.

In an example, the reaction initiator causes the compound 12 to heat up and cause a thermoluminescent fingerprint light emission spectrum mainly in the visible range with characteristic wavelengths.

In an example, an arrangement is provided, that enables a fingerprint-like and therefore false alarm resistant detection of a flame of a fuel in general and - in particular - a hydrogen flame and/or hydrogen micro flame. The detection is based on the following principle. A hydrogen flame and/or hydrogen micro flame occurs, e.g., due to a failure case in a fuel cell system. The heat generated by the hydrogen flame stimulates a surrounding "detection" material, i.e., the compound which is, e.g., a mixture of alkaline and/or earth alkaline metal salts, or any other suitable metal salts causing a "fingerprint" light emission spectrum mainly in the visible range with characteristic wavelengths "flame coloring". The fingerprint spectrum can be detected by a sensor unit and indicates a flame / hydrogen flame in a zero false alarm. The signal from the sensor unit can be used to trigger the shutdown of the hydrogen supply in a fuel cell system to finally stop the hydrogen flame.

In an example, the localization of a hydrogen flame is provided by applying different mixtures of "detection" materials, e.g., mixture of two or more metal salts or other suitable metal and/or metal ion containing materials and/or any other materials which emit light when thermally stimulated, e.g. such as zirconium oxide mixed with yttria, or any of their combinations, specific fingerprint light signals can be realized in order to localize the fire, e.g., application of different mixtures for different fire zones in the aircraft. The light signal can be detected by a light detection unit, e.g., a light sensor, light spectrometer installed at any suitable location in the surrounding area, and/or the light signal can be transferred from the flame location via glass fibers to any appropriate location for the detection unit. The glass fibers can be located in the surrounding area of the light source, so the total number of glass fibers can be drastically reduced compared to state-of-the-art fiber optics based detection means, and there is no laser required for the activation. The "detection" materials can be combined with pyrotechnic materials in order to intensify the generation of visible light.

In an example, an option for specific light generation caused by a flame is Chemiluminescence. The light signal is generated due to chemiluminescence reaction of two materials, e.g., luminol and an oxidizer, or any other appropriate mixture. The two materials who can react by chemiluminescence are encapsulated and separated from each other in a temperature sensitive material, e.g., small-scale encapsulation in thermoplastic spheres, the heat of the hydrogen flame melts down the encapsulation of the surrounding "detection" material, so the different materials can chemically react with each other causing a "fingerprint" chemiluminescent light emission spectrum with characteristic wavelengths. The light signal is maintained for a certain time after activation even after the H2-flame may have disappeared quickly which enables the detection of short flame events which may be beneficial for the early detection, in a proactive maintenance, of hydrogen leakages and/or dangerous situations.

In an example, the arrangement also enables a fingerprint-like and therefore false alarm resistant detection of a hydrogen leakage and/or hydrogen micro leakage. The detection is based on the following principle. A hydrogen leakage occurs, e.g., due to a failure case in a fuel cell system. The leaking hydrogen stimulates a surrounding "detection" material, e.g., a mixture of Pt, WO₃ and calcium fluoride causing the mixture to heat up and subsequently causing a thermoluminescent "fingerprint" light emission spectrum mainly in the visible range with characteristic wavelengths by "thermoluminescence". The fingerprint spectrum can be detected by a sensor unit and indicates a hydrogen leakage by a zero false alarm. The signal from the sensor unit can be used to trigger the shutdown of the hydrogen supply in a fuel cell system to finally stop the hydrogen leakage.

In an example, the localization of a hydrogen leakage is provided by applying different mixtures of "detection" materials, e.g., using different mixtures of different thermoluminescent materials and specific fingerprint light signals can be realized in order to localize the hydrogen leakage, e.g., by application of different mixtures for different fire zones in the aircraft. The light signal can be transferred from the leakage location via a glass fiber to any appropriate location for the detection unit. As the heat generation can also be caused by a hydrogen flame and/or hydrogen micro flame, this approach is also suitable for detecting flames and hydrogen flames and/or hydrogen micro flames in particular. In principle any suitable combination of the detection of the hydrogen flame or the hydrogen leakage can be applied dependent on the specific aircraft requirements. A propagation of a hydrogen flame and/or a micro hydrogen flame and/or a hydrogen leakage and/or a micro hydrogen leakage can be avoided by a subsequent quick hydrogen shutoff function.

Fig. 2 shows an example of a leakage characterization arrangement 110 and a detection system 100 responsive to leakage. The detection system 100 for leaking fuel 126, comprises at least one detector 102 and a leakage characterization arrangement 110 according to one of the previous examples and options comprising a compound 112 with at least two emission generating markers 114a, 114b. The at least one detector 102 is located in a detection distance 104 towards the compound 112. The compound 112 is configured to provide a specific emission pattern 106 depending on a location of each of the at least two emission generating markers 114a, 114b at an enclosure 118. The at least one detector 102 is configured to generate a specific detection signal 108 upon contact to the specific emission pattern 106 in the detection distance 104.

The term "in a detection distance" relates to an arrangement in which the at least one detector 102 is placed with a certain distance from the leakage site, i.e., the at least one detector 102 is not placed directly at the site, but further away such that the detection of the intermediate reaction of the compound 112 is still possible in Fig. 2. The at least one detector 102 is placed spaced apart by a determined detection distance 104 in Fig. 2.

In an example, the at least one detector 102 responds to photons of the detectable emission 32 of the compound 112 and the at least two emission generating markers 114a, 114b. In this case the at least one detector 102 in Fig. 2 samples visible photon radiation.

In an example, the at least one detector 102 can be provided as light sensors behind a prism.

In an example, the emission is configured such that it overcomes obstacles in the detection distance 104 to the at least one detector 102.

In an example, glass fibres can be provided to guide the photon emission to the at least one detector 102, not shown in Fig. 2.

In an example, the system further comprises at least one emission receiver, not shown in Fig. 2. The at least one emission receiver is configured to collect the specific emission pattern 106 from the compound 112 and configured to focus and/or enhance it towards the at least one detector 102.

In an example, the at least one emission receiver is provided as a glass fiber, not shown in Fig. 2.

In an example, the at least one emission receiver is provided as a reflecting surface of the enclosure 118 and/or its surroundings, not shown in Fig. 2.

In an example, the at least one detector 102 is placed in the immediate vicinity of the compound 112. This allows for successful transmission of the specific emission pattern 106 from the compound 112 to the at least one detector 102 in the case of a fire near or at the detection system 100, where smoke is generated, or there is a dusty environment or other clouding that weakens or blocks the transmission of the specific emission pattern 106 from the compound 112 to the at least one detector 102 in Fig. 2.

In an example, the compound 112 is configured to be a part of the at least one detector 102.

In an example, more than one detector 102 is provided, for example two, three, five or an array of detectors and different kinds of detectors are combined.

In an example, the response of an array of detectors with different orientations towards the leaking site can obtain the location of the leaking site.

As an advantage, only one detector is required since any possible leaking site will produce its own characteristic emission pattern 40.

In an example of Fig. 2, the system further comprises at least one enclosure 121 for storing the leaking fuel 126. The at least one enclosure 121 provides each of the at least two emission generating markers 114a, 114b at a different location 160a, 160b.

In an example, the blue emission marker is attached to the middle portion of the at least one enclosure 121 and the red emission marker is added to the top portion of the at least one enclosure 1, not shown in Fig. 2. Blue light will indicate a leakage site at the middle portion of the at least one enclosure 121, red light will indicate a leakage site at the top portion of the at least one enclosure 121.

In an example of Fig. 2, the system further comprises a shutoff valve 170 at a duct arrangement 172 comprising at least one specific duct 174 chosen from the group of a supply duct, a ventilation duct and an exhaust duct and a processing unit 180. The duct arrangement 172 is configured to supply the at least one enclosure 121. The processing unit 180 is connected to the shutoff valve 170 and to the at least one detector 102. The at least one detector 102 monitors the at least one enclosure 121. The processing unit 180 is configured to generate a specific shutoff signal 182 upon receiving a predetermined detection signal 184 from the at least one detector 102. The specific shutoff signal 182 triggers a closure of the shutoff valve 170 to stop the supply 186 to the at least one enclosure 121.

In an example, the processing unit 180 in Fig. 2 is configured to generate a specific shutoff signal 182 based on a comparison of the specific detection signal 108 with a database of characteristic emission patterns.

In an example, more than at least one enclosure 121 is provided, for example two enclosures A and B, that are indicated in Fig. 2 by the enclosure 121 having two separate inner volumes, the right hand inner volume of the inside 128 for example being enclosure A. Enclosure A comprises the blue emission marker that is one of the at least two emission generating markers 114a, 114b, and is supplied by the shutoff valve A that can for example be shutoff valve 170 in Fig. 2. Enclosure B comprises the red emission marker and is supplied by the shutoff valve B, not shown in Fig. 2. If blue light is detected, the processing unit 180 shuts down the fuel supply to enclosure A by shutoff valve A. If red light is detected, the processing unit 180 shuts down the fuel supply to enclosure B by shutoff valve B, not shown in Fig. 2. If the characteristic emission pattern 40 is composed of red and blue light, both shutoff valves A and B stop supply of fuel to the enclosure A and B.

As an advantage, a faster and more targeted stopping of a leakage at fuel converting system is provided.

In an example, after closing the shutoff valves, a checking whether the light blue or red goes out is possible, such that it can be determined whether the escaping hydrogen has been stopped by the shutoff valves and thus the proof is given that the flame must have gone out or finally the leakage has been stopped.

As a further advantage, a success control of the leakage stopping is possible.

In an example of Fig. 2, the at least one enclosure 121 is configured as at least one of the group of:
- a fluid consuming load configured to provide electrical and/or mechanical energy from the hydrogen,
- a supply system configured to supply hydrogen,
- a storing unit configured to supply hydrogen via the supply system to a fluid consuming load and/or a functional unit, and
- a functional unit configured to be contactable by hydrogen.

As an example of a fluid consuming load, a fuel cell is provided.

As an example of a supply system, a conduit system or piping is provided, not shown in Fig. 2.

As an example of a storing unit, a tank or reservoir for hydrogen and/or cryogenic hydrogen is provided, not shown in Fig. 2.

As an example of a functional unit, a sensor for measuring hydrogen pressure is provided, not shown in Fig. 2.

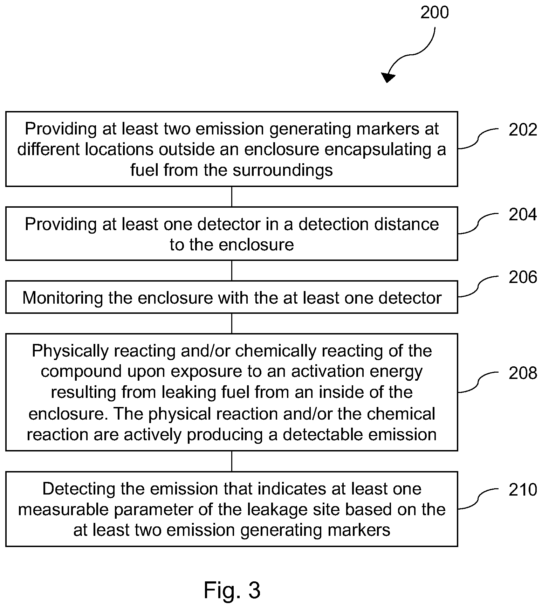

Fig. 3 shows basic steps of an example of a method 200 for detecting a leakage. The method 200 comprises the following steps, also with reference to the system shown in Fig. 2:
- In a first step 202, at least two emission generating markers 114a, 114b are provided at different locations 160a, 160b outside 116 an enclosure 121 encapsulating a fuel 120 from the surroundings 122.
- In a second step 204, at least one detector 102 is provided in a detection distance 104 to the enclosure 121.
- In a third step 206, the enclosure 121 is monitored with the at least one detector 102.
- In a fourth step 208, the compound 112 is physically and/or chemically reacted upon exposure to an activation energy 124 resulting from leaking fuel 126 from an inside 128 of the enclosure 121. The physical reaction and/or the chemical reaction 30 are actively producing a detectable emission 132.
- In a fifth step 210, the emission that indicates at least one measurable parameter 134 of the leakage site 136 is detected based on the at least two emission generating markers 114a, 114b.

In an example, it is provided to bring leaking fuel 126 of the enclosure 121 or burning leaking fuel 126 in contact with at least one of the two emission generating markers 114a, 114b.

In an example, the method steps also comprise:
- Yielding a specific detectable emission 132 indicative of the location of at least one of the two emission generating markers 114a, 114b,
- Detecting, by the at least one detector 102, the specific detectable emission 132,
- Generating, by the at least one detector 102, a specific detection signal 108,
   Generating a specific shutoff signal 182 based on a comparison of the specific detection signal 108 with a database of characteristic emission patterns, and
- Stopping the operation of the enclosure 121 with the fuel 120 by closing a specific shutoff valve 170 with the specific shutoff signal 182.

It is noted that a hydrogen flame transfers heat mainly by convection by ~ 90 % and not by radiation, here only ~ 10 %. Thus, it is more a local hot spot, e.g., hydrogen micro flame which needs to be detected rather than a fire with a high ratio of heat radiation, kerosene fire: ~ 33 % convection and ~ 66 % radiation. By providing the compound and to use its reaction for detection, the above mentioned issue with the hard to detect hydrogen flames is solved.

In an example, for a safe and reliable operation of a hydrogen, H2, based fuel cell system, i.e., an enclosure, a fast and reliable detection of a hydrogen flame and/or hydrogen micro flame and/or a hydrogen leakage and/or a hydrogen micro leakage, i.e., the leaking fuel, is required in order to stop the H2-flame and/or the H2-leakage as quickly and as reliable as possible.

As an example, for hydrogen flame detection, the solutions as provided in the various examples explained above provide dedicated advantages over current technologies.

Unlike temperature sensors, that may have difficulties to detect local hot spots, or difficulties to localize a small H2-flame or micro H2-flame, the present solutions are false alarm resistant, as they cannot directly be disturbed by other heat sources.

Unlike optical sensors / cameras, that are directly detecting light from H2 leakage, the present solutions are able to better optically cover all areas of potential H2-flame locations and/or H2-micro flame locations due to the compound compensating for the otherwise low intensity of visible light generated by H2-flames themselves.

As an example, due to providing the compound activated by the H2 leakage, high effort is not really required to localize a H2-flame, e.g., through special glass fiber optics.

Unlike fiber optics based temperature sensing that is based on the evaluation of a temperature dependent change of reflectance of a laser beam through a glass fiber, which may be seen as not very suitable because it is an active method, e.g., laser required, and requiring at each potential measurement location a glass fiber as well as a connection to an evaluation unit, the present solutions do not require such high effort.

Unlike chemical sensors, e.g., catalytic and/or electrochemical, that are located somewhere in the area to be monitored, the present solutions can detect the hydrogen leakage site and not only in the air without the capability for localization of the H2-leakage. Also, false alarm resistance is provided due to avoiding any issue that may occur with cross sensitivity with other compounds in the air.

Due to applying the compound on areas with potential leakage occasions, the at least one detector for generating a specific detection signal upon contact to the specific emission pattern in the detection distance, the present solutions do also avoid the need for covering all areas, as for example needed in case of acoustic sensors, which may have difficulties to acoustically cover all areas of potential H2-leakages and/or micro H2-leakages and which are also not false alarm resistant due to cross-sensitivity with other acoustic sources.

Contrary to color change materials, which - based on chemicals - cause a visible color change when in contact with gaseous hydrogen based on a chemical reaction of hydrogen with the mentioned material, the present solution is much more suitable for aircraft applications because the compound and the emission generating markers provide an active emission material that actively emits light, whereas the color change materials do not provide any active emission.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A leakage characterization arrangement (10) comprising a compound (12) with at least two emission generating markers (14a, 14b);
wherein the compound is applicable at an outside (16) of an enclosure (18), encapsulating a fuel (20) from the surroundings (22);
wherein the applied compound is configured to physically react and/or chemically react upon exposure to an activation energy (24) resulting from leaking fuel (26) from an inside (28) of the enclosure; and
wherein the physical reaction and/or the chemical reaction (30) actively produce a detectable emission (32) that indicates at least one measurable parameter (34) of a leakage site (36) based on the at least two emission generating markers.

2. Arrangement according to claim 1, wherein the detectable emission provides a characteristic emission pattern (40);
wherein the characteristic emission pattern comprises a unique emission spectrum of emission intensities (42) at distinct photon wavelengths (44); and
wherein the characteristic emission pattern is indicative for the at least one measurable parameter of the leakage site at the enclosure.

3. Arrangement according to claim 1 or 2, wherein the at least two emission generating markers each comprise a different chemical composition; and
wherein the different chemical composition provides for a characteristic photon emission.

4. Arrangement according to claim 1, 2 or 3, wherein each of the at least two emission generating markers provides a contribution to the emission intensities of the characteristic emission pattern; and
wherein the contribution is indicative for the at least one measurable parameter being the location (46) of the leakage site with respect to the enclosure.

5. Arrangement according to one of the preceding claims, wherein the at least two emission generating markers are separated in the leakage characterization arrangement with respect to the enclosure, such that they have a different distance (48) to the activation energy of the leaking fuel.

6. Arrangement according to one of the preceding claims, wherein the compound further comprises at least one emission extender (50) having luminescent properties; and
wherein the at least one emission extender is configured to prolong the detectable emission by its luminescence beyond a fading of the activation energy.

7. Arrangement according to one of the preceding claims, wherein at least one of the at least two emission generating markers of the compound is encapsulated in at least one retardation layer (52); and
wherein the at least one retardation layer is configured to provide for an energy and/or time dependent detectable emission (54) of the compound when in contact to the activation energy.

8. Arrangement according to one of the preceding claims, wherein the at least one measurable parameter is further chosen from the group comprising:
- a size of the leakage site; and/or
- a geometry of the leakage site; and/or
- an amount of energy released at the leakage site; and/or
- a duration of the leakage at the leakage site; and/or
- a velocity of leaking fuel at the leakage site; and/or
- a flame or no flame at the leakage site;
- a least one temperature of the leakage site;
- a least one minimum temperature at the leakage site;
- a least one temperature zone at the leakage site;
or combinations thereof.

9. Arrangement according to one of the preceding claims, wherein the leaking fuel is hydrogen and the physical reaction and/or the chemical reaction of the compound are initiated by an activation energy of leaking hydrogen from the enclosure.

10. Arrangement according to one of the preceding claims, wherein the activation energy for the compound:
i) results from a thermal energy release of the leaking fuel; and/or
ii) is initially generated in the compound itself by contact between the compound and the leaking fuel.

11. A detection system (100) for leaking fuel, comprising:
- at least one detector (102); and
- a leakage characterization arrangement (110) according to one of the preceding claims comprising a compound (112) with at least two emission generating markers (114a, 114b);
wherein the at least one detector is located in a detection distance (104) towards the compound;
wherein the compound is configured to provide a specific emission pattern (106) depending on a location of each of the at least two emission generating markers at an enclosure (118); and
wherein the at least one detector is configured to generate a specific detection signal (108) upon contact to the specific emission pattern in the detection distance.

12. System according to claim 11, further comprising at least one enclosure (121) for storing the leaking fuel;
wherein the at least one enclosure provides each of the at least two emission generating markers at a different location (160a, 160b).

13. System according to claim 11 or 12, further comprising:
- a shutoff valve (170) at a duct arrangement (172) comprising at least one specific duct (174) chosen from the group of a supply duct, a ventilation duct and an exhaust duct; and
- a processing unit (180);
wherein the duct arrangement is configured to supply the at least one enclosure;
wherein the processing unit is connected to the shutoff valve and to the at least one detector;
wherein the at least one detector monitors the at least one enclosure;
wherein the processing unit is configured to generate a specific shutoff signal (182) upon receiving a predetermined detection signal (184) from the at least one detector; and
wherein the specific shutoff signal triggers a closure of the shutoff valve to stop the supply (186) to the at least one enclosure.

14. System according to claim 11, 12 or 13, wherein the at least one enclosure is configured as at least one of the group of:
- a fluid consuming load configured to provide electrical and/or mechanical energy from the hydrogen;
- a supply system configured to supply hydrogen;
- a storing unit configured to supply hydrogen via the supply system to a fluid consuming load and/or a functional unit; and
- a functional unit configured to be contactable by hydrogen.

15. A method (200) for detecting a leakage, the method comprising the following steps:
- Providing (202) at least two emission generating markers at different locations outside an enclosure encapsulating a fuel from the surroundings;
- Providing (204) at least one detector in a detection distance to the enclosure;
- Monitoring (206) the enclosure with the at least one detector;
- Physically reacting and/or chemically reacting (208) of the compound upon exposure to an activation energy resulting from leaking fuel from an inside of the enclosure;
wherein the physical reaction and/or the chemical reaction are actively producing a detectable emission; and
- Detecting (210) the emission that indicates at least one measurable parameter of the leakage site based on the at least two emission generating markers.
